(19) Europäisches Patentamt
European Patent Office
Office européen des brevets

(11) EP 0 612 754 B1

(12) # EUROPÄISCHE PATENTSCHRIFT

(45) Veröffentlichungstag und Bekanntmachung des Hinweises auf die Patenterteilung:
**19.08.1998 Patentblatt 1998/34**

(51) Int Cl.[6]: **C07F 7/08**

(21) Anmeldenummer: **94102172.7**

(22) Anmeldetag: **12.02.1994**

(54) **Organopolysiloxanpolyether und deren Verwendung als hydrolysestabile Netzmittel in wässrigen Systemen**

Organopolysiloxanes with polyether sidechains and their use as hydrolytically stable wetting agent in aqueous systems

Organopolysiloxanes avec un groupement polyéther et leur utilisation comme agent de mouillage stable à l'hydrolyse dans des systèmes aqueux

(84) Benannte Vertragsstaaten:
**BE DE ES FR GB IT NL**

(30) Priorität: **25.02.1993 DE 4305794**
**27.05.1993 DE 4317605**

(43) Veröffentlichungstag der Anmeldung:
**31.08.1994 Patentblatt 1994/35**

(73) Patentinhaber: **Th. Goldschmidt AG**
**45127 Essen (DE)**

(72) Erfinder:
- **Feldmann-Krane, Georg, Dr.**
  **D-45470 Mülheim (DE)**
- **Höhner, Werner**
  **D-42555 Velbert (DE)**
- **Schaefer, Dietmar, Dr.**
  **D-45529 Hattingen (DE)**
- **Silber, Stefan, Dr.**
  **D-47804 Krefeld (DE)**

(56) Entgegenhaltungen:
**FR-A- 2 484 425** **GB-A- 802 467**
**US-A- 3 172 899** **US-A- 3 299 112**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 612 754 B1

## Beschreibung

Die Erfindung betrifft Organopolysiloxanpolyether mit erhöhter Hydrolysebeständigkeit. Die Erfindung betrifft ferner die Verwendung derartiger Polysiloxanpolyether als Netzmittel in wäßrigen Systemen.

Organopolysiloxanpolyether sind seit langem bekannt. Sie bestehen im allgemeinen aus einem Organopolysiloxan, an welches end- und/oder seitenständig Polyoxyalkylenblöcke gebunden sind. Die Verknüpfung der Polyoxyalkylenblöcke mit dem Polysiloxan kann über SiC- oder SiOC-Bindungen erfolgen.

Aus der umfangreichen Patentliteratur wird stellvertretend als nächstliegender Stand der Technik die US-PS 3 299 112 genannt. In dieser Patentschrift wird ein Siloxan beschrieben, welches ausschließlich zusammengesetzt ist aus

(a) einer Gruppe mit der Formel

$$O_{\frac{3-a}{2}}\overset{R_a}{\overset{|}{Si}}C_mH_{2m}(OC_2H_4)_n(OC_3H_6)_pOR'$$

und

(b) 1 bis 4 Gruppen der Formel

$$R_bSiO_{\frac{4-b}{2}}$$

wobei die Reste und Indices folgende Bedeutung haben:

a hat einen Wert von 0 bis 2,
b hat einen Wert von 2 bis 3,
R ist eine Methyl- oder Ethylgruppe,
R' ist eine Alkylgruppe mit 1 bis 4 Kohlenstoffatomen,
m hat einen Wert von 2 bis 4,
n hat einen durchschnittlichen Wert von 4 bis 17,
p hat einen durchschnittlichen Wert von 0 bis 5,

das Verhältnis von n : p ist mindestens 2 : 1,
die Summe von n + p hat einen Wert von 4 bis 17,
die Polyoxyalkylengruppe ist mit dem Siliciumatom der Einheit (a) über wenigstens 2 Kohlenstoffatome der $C_mH_{2m}$-Gruppe verbunden.

In der vorgenannten US-Patentschrift wird gezeigt, daß diese Verbindungen insbesondere als Netzmittel in wäßrigen Systemen brauchbar sind.

Es hat sich jedoch gezeigt, daß Verbindungen dieser Struktur nur eine begrenzte Hydrolysestabilität aufweisen. Insbesondere in sauren oder basischen wäßrigen Lösungen tritt eine Spaltung der SiOSi-Bindung auf, wobei die Hydrolyseprodukte erneuter Kondensation unterliegen können, so daß im Verlauf des hydrolytischen Abbaus durch erneute Kondensation höhermolekulare Organopolysiloxanpolyether entstehen, die verringerte oder keine Netzwirkung aufweisen.

Die vorliegende Erfindung befaßt sich mit dem technischen Problem, Organopolysiloxanpolyether aufzufinden, welche eine verbesserte Hydrolysestabilität aufweisen und somit ihre Netzwirkung über einen längeren Zeitraum beibehalten. Diese Beibehaltung der Netzwirkung ist insbesondere dann notwendig, wenn wäßrige Zubereitungen, die diese Netzmittel enthalten, über einen Zeitraum von mehreren Monaten vor ihrer Anwendung gelagert werden sollen. Dies ist z.B. bei wäßrigen Lacksystemen der Fall, die vom Hersteller konfektioniert werden und nach ihrer Auslieferung an den Händler bei diesem über mehrere Monate gelagert werden, bevor sie bestimmungsgemäß angewendet werden. Es wird somit angestrebt, Organopolysiloxanpolyether aufzufinden, deren Hydrolysestabilität in wäßrigen Systemen mehrere Monate, nach Möglichkeit ein bis zwei Jahre, beträgt.

Überraschenderweise wurde gefunden, daß diese Eigenschaften bei Organopolysiloxanpolyethern der allgemeinen Formel

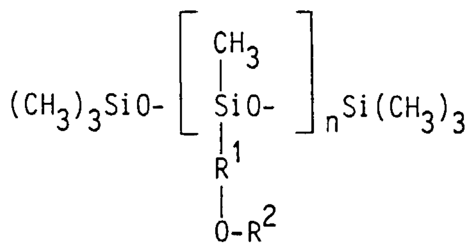

zu finden sind, wobei

$R^1$ ein zweiwertiger, gegebenenfalls verzweigter Alkylenrest mit 3 bis 6 Kohlenstoffatomen in der Alkylenkette ist,

$R^2$ ein Rest der Formel $(C_mH_{2m}O\text{-})_sR^3$ ist, in der m eine Zahl von > 2,0 und ≦ 2,5, s eine Zahl von 4 bis 21 und $R^3$ ein Wasserstoffrest, ein Alkylrest mit 1 bis 4 Kohlenstoffatomen oder ein Acetylrest ist, wobei jedoch, wenn der Rest $R^1$ nur 3 oder 4 Kohlenstoffatome aufweist, eine blockweise Anordnung der Oxyalkyleneinheiten entsprechend der Formel $(C_3H_6O\text{-})_p(C_2H_4O\text{-})_q(C_3H_6O\text{-})_rR^3$ einzuhalten ist, in der p eine Zahl von 1 bis 3, q eine Zahl von 4 bis 15 und r eine Zahl von 0 bis 3 ist,

n eine Zahl von 1 bis 3 ist,

mit der Maßgabe, daß mindestens 50 Mol-% der Oxyalkylengruppen Oxyethylengruppen sind.

$R^1$ ist ein zweiwertiger, gegebenenfalls verzweigter Alkylenrest mit 3 bis 6 Kohlenstoffatomen in der Alkylenkette. Beispiele solcher Reste sind die Reste

$(CH_2)_3\text{-}$, $\text{-}(CH_2)_4\text{-}$, $\text{-}(CH_2)_6\text{-}$,

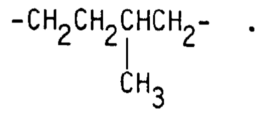

Besonders bevorzugt ist der Rest $\text{-}(CH_2)_3\text{-}$ und der Rest $\text{-}(CH_2)_6$.

$R^2$ kann zwei verschiedene Bedeutungen haben, die von der Anzahl der Kohlenstoffatome im Rest $R^1$ abhängen: $R^2$ hat allgemein die Bedeutung des Restes $(C_mH_{2m}O\text{-})_sR^3$, wobei m eine Zahl von > 2,0 und ≦ 2,5 und s eine Zahl von 4 bis 21 ist. Der Index m ergibt sich aus dem Verhältnis von Oxyethylen- zu Oxypropyleneinheiten im Polyether und kann jeden beliebigen Wert von > 2,0 und ≦ 2,5 annehmen. Hat m einen Wert von 2,5, bedeutet dies für den Fall, daß außer Oxyethyleneinheiten nur Oxypropyleneinheiten vorhanden sind, daß 50 Mol-% der Oxyalkyleneinheiten Oxyethyleneinheiten und 50 Mol-% der Oxyalkyleneinheiten Oxypropyleneinheiten sind. Die Gesamtzahl der Oxyalkyleneinheiten ist durch den Wert des Index s gegeben.

Die Anordnung der Oxyalkyleneinheiten kann statistisch oder blockweise erfolgen. Ist jedoch die Kohlenstoffanzahl des Restes $R^1$ gleich 3 oder 4, ist nur die blockweise Anordnung der Oxyalkylengruppen zulässig, so daß der Rest $R^2$ dann der Formel $(C_3H_6O\text{-})_p(C_2H_4O\text{-})_q(C_3H_6O\text{-})_rR^3$ entsprechen muß, wobei p eine Zahl von 1 bis 3, q eine Zahl von 4 bis 15 und r eine Zahl von 0 bis 3 ist. Die Indices p, q und r sind dabei Durchschnittswerte. Weist der Rest $R^1$ 3 oder 4 Kohlenstoffatome auf, beginnt die Polyoxyalkylenkette des Restes $R^2$ mit mindestens einer Oxypropyleneinheit. Hierdurch wird gewährleistet, daß auch bei niedriger Kohlenstoffanzahl des Restes $R^1$ die erfindungsgemäßen Verbindungen die gewünschte Hydrolysestabilität aufweisen.

n gibt die Anzahl der difunktionellen Siloxy-Einheiten an und hat einen Wert von 1 bis 3.

Um die Wasserlöslichkeit und die Netzeigenschaften des Organopolysiloxanpolyethers sicherzustellen, muß die Bedingung erfüllt sein, daß mindestens 50 Mol-% der Oxyalkylengruppen Oxyethylengruppen sind.

Vorzugsweise hat der Rest $\text{-}R^1\text{-}O\text{-}R^2$ eine Molmasse von 400 bis 700.

$R^3$ ist ein Wasserstoffrest, ein Alkylrest mit 1 bis 4 Kohlenstoffatomen oder ein Acetylrest. Bevorzugt ist $R^3$ ein Wasserstoffrest.

Beispiele erfindungsgemäßer Verbindungen sind

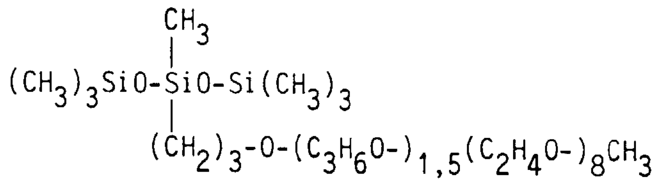

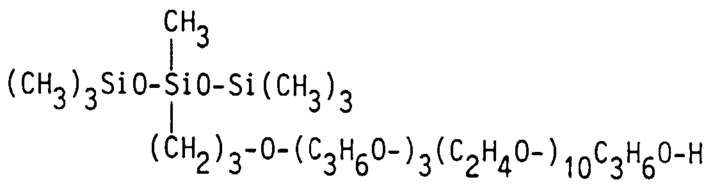

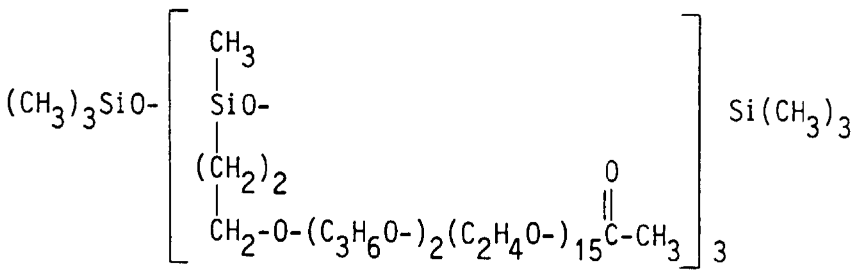

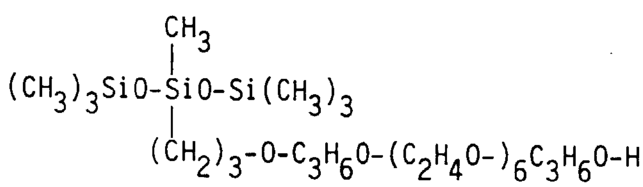

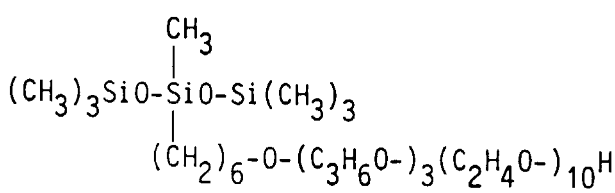

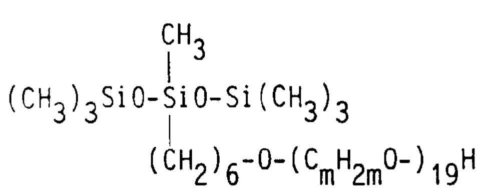

m = 2,4

Die Herstellung der erfindungsgemäßen Verbindungen geschieht in an sich bekannter Weise durch Addition eines Polyethers, dessen Startalkohol endständig eine olefinische Doppelbindung aufweist, an ein Wasserstoffsiloxan in Gegenwart von Platinkatalysatoren.

Die erfindungsgemäßen Verbindungen weisen die gewünschte Hydrolysestabilität auf und besitzen hervorragende Netzeigenschaften. Sie eignen sich deshalb insbesondere als Netzmittel in wäßrigen Lacksystemen sowie in wäßrigen Zubereitungen von Agrochemikalien, wie Herbizide, Pestizide und Fungizide. Die Verbindungen werden der wäßrigen Zubereitung in Mengen von 0,01 bis 1 Gew.-% zugesetzt. Höhere Zusatzmengen sind im Regelfall unnötig.

In den folgenden Beispielen wird die an sich bekannte Herstellung der erfindungsgemäßen Verbindungen gezeigt. Die Netzwirkung von wäßrigen Zubereitungen, welche die erfindungsgemäßen Verbindungen enthalten, wird anhand von Spreitungsmessungen nachgewiesen. Die Langzeithydrolysestabilität wird durch die verbesserte Stabilität der Verbindungen in sauren und alkalischen, bei 50°C gelagerten Lösungen in Form von Kurzzeitversuchen demonstriert und mit der Hydrolysestabilität von Produkten des Standes der Technik verglichen.

Beispiel 1 a

Herstellung eines Organopolysiloxanpolyethers der durchschnittlichen Formel

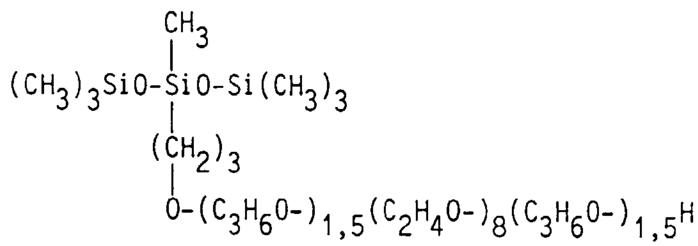

700 g (1,2 Mol) eines Allylalkohol-gestarteten Polyethers der durchschnittlichen Formel

$$CH_2{=}CH{-}CH_2O{-}(C_3H_6O{-})_{1,5}(C_2H_4O{-})_8(C_3H_6O{-})_{1,5}H$$

werden mit 30 mg (0,07 mMol) Hexachloroplatinsäure versetzt und auf 110°C erwärmt. Innerhalb einer Stunde werden 222 g (1 Mol) 1,1,1,3,5,5,5-Heptamethyltrisiloxan zugetropft und die Reaktionsmischung weitere 4 Stunden bei dieser Temperatur gerührt. Der SiH-Umsatz beträgt nach dieser Reaktionszeit mehr als 90 %. Der resultierende Organopolysiloxanpolyether weist bei 25°C eine Viskosität von ca. 100 mPas auf.

Beispiel 1 b

Herstellung eines Organopolysiloxanpolyethers der durchschnittlichen Formel

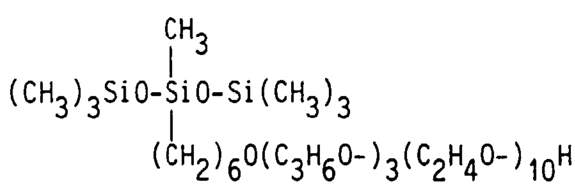

857 g (1,2 Mol) eines 5-Hexen-1-ol-gestarteten Polyethers der durchschnittlichen Formel

$$CH_2{=}CH{-}(CH_2{-})_4O(C_3H_6O{-})_3(C_2H_4O{-})_{10}H$$

werden mit 30 mg (0,07 mMol) Hexachloroplatinsäure versetzt und auf 105°C erwärmt. Innerhalb einer Stunde werden 222 g (1,0 Mol) 1,1,1,3,5,5,5-Heptamethyltrisiloxan zugetropft und die Reaktionsmischung weitere 4 Stunden bei dieser Temperatur gerührt. Der SiH-Umsatz beträgt nach dieser Reaktionszeit mehr als 90 %. Der resultierende Organopolysiloxanpolyether weist bei 25°C eine Viskosität von ca. 100 mPas auf.

Beispiel 2

Vergleich der Netzwirkung und Hydrolysestabilität wäßriger Lösungen der gemäß Beispiel 1 a und 1 b hergestellten erfindungsgemäßen Organopolysiloxanpolyether unter sauren (pH 5) und alkalischen (pH 9) Bedingungen gegenüber Produkten des Standes der Technik

Produkt 1: erfindungsgemäße Verbindung von Beispiel 1 a
Produkt 2: erfindungsgemäße Verbindung von Beispiel 1 b
Produkt 3: nicht erfindungsgemäß; durchschnittliche Formel:

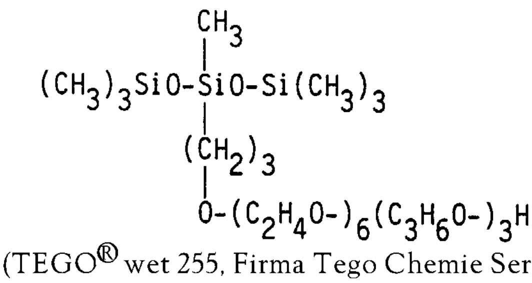

(TEGO® wet 255, Firma Tego Chemie Service GmbH)

Produkt 4: nicht erfindungsgemäß; durchschnittliche Formel:

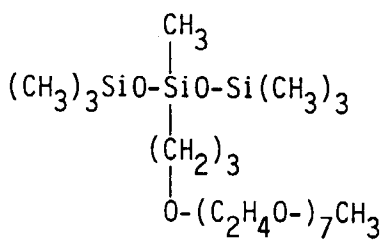

(in US -PS 3 299 112 offenbart)

A: Netzwirkung unter sauren Bedingungen (pH 5)

0,1 g Organopolysiloxanpolyether werden in 100 ml destilliertem Wasser gelöst, dessen pH-Wert zuvor mittels Kaliumhydrogenphthalat-Puffer auf 5,0 eingestellt wurde. 0,05 ml dieser Lösung werden mittels Mikropipette auf eine PVC-Folie aufgetragen. Infolge der niedrigen Oberflächenspannung der wäßrigen Organopolysiloxanpolyetherlösung spreitet der aufgetragene Wassertropfen spontan auf der PVC-Folie. Ein direktes Maß für die Netzwirkung des Organopolysiloxans ist dabei der Durchmesser der benetzten Fläche (gemessen in mm), den die wäßrige Lösung einnimmt. Zur Überprüfung der Hydrolysestabilität der Organopolysiloxanpolyether in wäßriger Lösung bei pH 5 werden Benetzungsversuche unmittelbar nach Herstellung der Lösung sowie 24 Stunden, 72 Stunden, 1 Woche, 2 und 3 Wochen danach durchgeführt. Die wäßrigen Lösungen werden während der Versuchsdauer bei 50°C gelagert. Abnehmende Spreitungswirkung zeigt die hydrolytische Zersetzung an. Die Resultate sind in Tabelle 1 zusammengefaßt.

Tabelle 1

| Spreitung wäßriger Organopolysiloxanpolyether (Lagerung bei 50°C) Lösungen (0,05 ml; 0,1 %ig) bei pH 5 auf PVC-Folie | | | | | | |
|---|---|---|---|---|---|---|
| Produkt | Startwert | 24 h | 72 h | 1 W | 2 W | 3 W |
| ohne Tensid | 8 | 8 | 8 | 8 | 8 | 8 |
| Produkt 1 | 40 | 40 | 40 | 38 | 33 | 27 |
| Produkt 2 | 40 | 40 | 40 | 40 | 40 | 36 |
| Produkt 3 | 44 | 32 | 15* | 8 | 8 | 8 |
| Produkt 4 | 42 | 30 | 23 | 14* | 8 | 8 |

* Netzfehler

B: Netzwirkung unter alkalischen Bedingungen (pH 9)

0,2 g Organopolysiloxanpolyether werden in 100 ml destilliertem Wasser gelöst, dessen pH-Wert zuvor mittels Natriumborat-Puffer auf 9,0 eingestellt wurde. Auftrag auf PVC-Folie und Bewertung der Netzwirkung sowie Hydrolysestabilität erfolgt wie unter A beschrieben. Die Ergebnisse sind in Tabelle 2 zusammengefaßt.

Tabelle 2

| Spreitung wäßriger Organopolysiloxanpolyether (Lagerung bei 50°C) Lösungen (0,05 ml; 0,2 %ig) bei pH 9 auf PVC-Folie | | | | | | |
|---|---|---|---|---|---|---|
| Produkt | Startwert | 24 h | 72 h | 1 W | 2 W | 3 W |
| ohne Tensid | 8 | 8 | 8 | 8 | 8 | 8 |
| Produkt 1 | 40 | 40 | 40 | 40 | 38 | 34 |
| Produkt 2 | 40 | 40 | 40 | 37 | 33 | 28 |
| Produkt 3 | 44 | 22* | 15* | 8 | 8 | 8 |
| Produkt 4 | 42 | 36 | 26 | 17* | 8 | 8 |

* Netzfehler

Aus den gezeigten Ergebnissen geht die Überlegenheit des erfindungsgemäßen Organopolysiloxanpolyethers hinsichtlich hydrolytischer Stabilität eindeutig hervor.

**Patentansprüche**

**1.** Organopolysiloxanpolyether der allgemeinen Formel

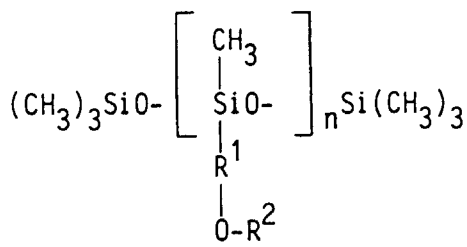

wobei

$R^1$ ein zweiwertiger, gegebenenfalls verzweigter Alkylenrest mit 3 bis 6 Kohlenstoffatomen in der Alkylenkette ist,
$R^2$ ein Rest der Formel $(C_mH_{2m}O\text{-})_sR^3$ ist, in der m eine Zahl von > 2,0 und ≦ 2,5, s eine Zahl von 4 bis 21 und $R^3$ ein Wasserstoffrest, ein Alkylrest mit 1 bis 4 Kohlenstoffatomen oder ein Acetylrest ist, wobei jedoch, wenn der Rest $R^1$ nur 3 oder 4 Kohlenstoffatome aufweist, eine blockweise Anordnung der Oxyalkyleneinheiten entsprechend der Formel $(C_3H_6O\text{-})_p(C_2H_4O\text{-})_q(C_3H_6O\text{-})_rR^3$ einzuhalten ist, in der p eine Zahl von 1 bis 3, q eine Zahl von 4 bis 15 und r eine Zahl von 0 bis 3 ist,
n eine Zahl von 1 bis 3 ist,

mit der Maßgabe, daß mindestens 50 Mol-% der Oxyalkylengruppen Oxyethylengruppen sind.

**2.** Organopolysiloxanpolyether nach Anspruch 1, dadurch gekennzeichnet, daß $R^1$ ein $-(CH_2)_a$-Rest ist, wobei a eine Zahl von 3 bis 6 bedeutet.

**3.** Organopolysiloxanpolyether nach Anspruch 1, dadurch gekennzeichnet, daß $R^3$ ein Wasserstoffrest ist.

**4.** Organopolysiloxanpolyether nach Anspruch 1, dadurch gekennzeichnet, daß n = 1 ist.

**5.** Organopolysiloxanpolyether nach Anspruch 1, dadurch gekennzeichnet, daß p = 1 bis 1,5 ist.

**6.** Organopolysiloxanpolyether nach Anspruch 1, dadurch gekennzeichnet, daß q = 5 bis 10 ist.

**7.** Organopolysiloxanpolyether nach Anspruch 1, dadurch gekennzeichnet, daß r = 1 bis 1,5 ist.

**8.** Organopolysiloxanpolyether nach Anspruch 1, dadurch gekennzeichnet, daß die Molmasse des Restes -$R^1$-O-$R^2$ = 400 bis 700 beträgt.

**9.** Verwendung der Organopolysiloxanpolyether nach Ansprüchen 1 bis 8 als hydrolysestabile Netzmittel in wäßrigen Systemen in Mengen von 0,01 bis 1 Gew.-%, bezogen auf Zubereitung.

## Claims

**1.** Organopolysiloxane polyethers of the general formula

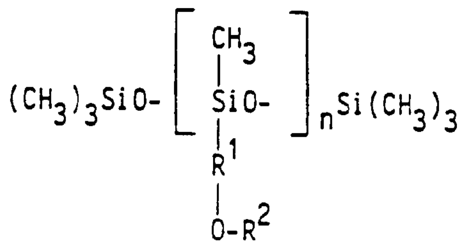

where

$R^1$ is a divalent, branched or unbranched alkylene radical having from 3 to 6 carbon atoms in the alkylene chain,
$R^2$ is a radical of the formula $(C_mH_{2m}O\text{-})_sR^3$, where m is from >2.0 to ≤2.5, s is from 4 to 21 and $R^3$ is a hydrogen atom, an alkyl radical having from 1 to 4 carbon atoms or an acetyl radical, but if the radical $R^1$ has only 3 or 4 carbon atoms the arrangement of the oxyalkylene units is blockwise in accordance with the formula $(C_3H_6O\text{-})_p(C_2H_4O\text{-})_q(C_3H_6O\text{-})_rR^3$, where p is from 1 to 3, q is from 4 to 15 and r is from 0 to 3,
n is from 1 to 3,

with the proviso that at least 50 mol% of the oxyalkylene groups are oxyethylene groups.

**2.** Organopolysiloxane polyethers according to Claim 1, characterized in that $R^1$ is a - $(CH_2)_a$ - radical, where a is from 3 to 6.

**3.** Organopolysiloxane polyethers according to Claim 1, characterized in that $R^3$ is a hydrogen atom.

**4.** Organopolysiloxane polyethers according to Claim 1, characterized in that n = 1.

**5.** Organopolysiloxane polyethers according to Claim 1, characterized in that p = 1 to 1.5.

**6.** Organopolysiloxane polyethers according to Claim 1, characterized in that q = 5 to 10.

**7.** Organopolysiloxane polyethers according to Claim 1, characterized in that r = 1 to 1.5.

**8.** Organopolysiloxane polyethers according to Claim 1, characterized in that the molar mass of the radical -$R^1$-O-$R^2$ = 400 to 700.

**9.** Use of the organopolysiloxane polyethers according to Claims 1 to 8 as hydrolytically stable wetting agents in aqueous systems in amounts of from 0.01 to 1% by weight, based on the preparation.

## Revendications

**1.** Organopolysiloxanepolyéther de formule générale

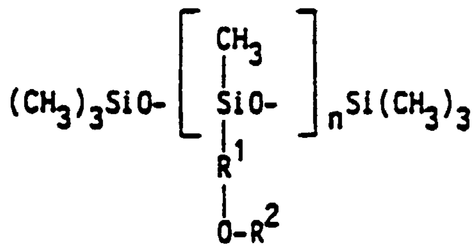

dans laquelle

$R^1$ est un radical alcoylène bivalent, le cas échéant ramifié avec 3 à 6 atomes de carbone dans la chaîne alcoylène,
$R^2$ est un radical de formule $(C_mH_{2m}O-)_sR^3$, dans laquelle m est un nombre >2,0 et ≤2,5, s est un nombre compris entre 4 et 21 et $R^3$ est un radical hydrogène, un radical alcoyle avec de 1 à 4 atomes de carbone ou un radical acétyle, dans lequel, cependant, lorsque le radical $R^1$ ne présente que 3 ou 4 atomes de carbone, un arrangement par blocs des unités oxyalcoylène correspondant à la formule $(C_3H_6O-)_p(C_2H_4O-)_q(C_3H_6O-)_rR^3$ est à observer, dans laquelle p est un nombre compris entre 1 et 3, q est un nombre compris entre 4 et 15 et
r est un nombre compris entre 0 et 3,
n est un nombre compris entre 1 et 3,

étant entendu qu'au moins 50% en mole des groupes oxyalcoylène sont des groupes oxyéthylène.

**2.** Organopolysiloxanepolyéther suivant la revendication 1, caractérisé en ce que $R^1$ est un radical $-(CH_2)_a-$, dans lequel a est un nombre compris entre 3 et 6.

**3.** Organopolysiloxanepolyéther suivant la revendication 1, caractérisé en ce que $R^3$ est un radical hydrogène.

**4.** Organopolysiloxanepolyéther suivant la revendication 1, caractérisé en ce que n = 1.

**5.** Organopolysiloxanepolyéther suivant la revendication 1, caractérisé en ce que p = 1 à 1,5.

**6.** Organopolysiloxanepolyéther suivant la revendication 1, caractérisé en ce que q = 5 à 10.

**7.** Organopolysiloxanepolyéther suivant la revendication 1, caractérisé en ce que r= 1 à 1,5.

**8.** Organopolysiloxanepolyéther suivant la revendication 1, caractérisé en ce que la masse molaire du radical $-R^1-O-R^2$ vaut 400 à 700.

**9.** Utilisation des organopolysiloxane-polyéthers suivant les revendications 1 à 8, comme agent de mouillage stable à l'hydrolyse dans des systèmes aqueux, en des quantités de 0,01 à 1% en poids, par rapport à la préparation.